# EUROPEAN PATENT APPLICATION

(11) **EP 3 313 099 A1**
(43) Date of publication of application: **25.04.2018**
(21) Application number: 17201558.8
(22) Date of filing: 26.09.2008
(51) Int. Cl.: H04S 1/00, H04S 5/00, G11B 20/10, H04R 5/04

(54) **APPARATUS AND METHOD FOR PROCESSING 3D AUDIO SIGNAL BASED ON HRTF, AND HIGHLY REALISTIC MULTIMEDIA PLAYING SYSTEM USING THE SAME**

(30) Priority: 18.12.2007 KR 20070133710; 29.04.2008 KR 20080040072
(62) Divisional of application: 08862310.3
(71) Applicant: Electronics and Telecommunications Research Institute, Daejeon 305-350 (KR)
(72) Inventor: LEE, Yongju, 305-728 Daejon (KR); JANG, Inseon, 305-804 Daejon (KR); JANG, Daeyoung, 305-768 Daejon (KR); SEO, Jeong-Il, 361-853 Cheongju-si Chungbuk (KR); KANG, Kyeongok, 305-727 Daejon (KR); KIM, Jinwoong, 305-761 Daejon (KR); HONG, Jinwoo, 305-509 Daejon (KR)
(74) Representative: Betten & Resch

(57) **Abstract**

A three-dimensional audio signal processing apparatus using a Head Related Transfer Function (HRTF) includes an audio decoder for decoding audio data to restore original audio signals and a three-dimensional audio generator for generating three-dimensional signals corresponding to the audio signals restored by using the HRTF modeled according to physical characteristics of an user, wherein the HRTF modeled according to physical characteristics of an user is an individualized HRTF.

## Description

### TECHNICAL FIELD

The present invention relates to a realistic three-dimensional audio service and, more particularly, to a three-dimensional (3D) audio signal process apparatus and method for providing the most realistic three-dimensional audio signals by generating three-dimensional audio signals based on an Head Related Transfer Function (HRTF) modeled according to physical characteristics of an individual user and a highly realistic multimedia playing system using the same.

This work was supported by the IT R&D program for MIC/IITA[2007-S-004-01, "Development of Glassless Single-User 3D Broadcasting Technologies"].

### BACKGROUND ART

Recently, the number of people watching multimedia data through diverse multimedia playing systems such as a MP3 player, a Portable Multimedia Player (PMP), a cell phone, and a Digital Multimedia Broadcasting (DMB) player is increasing.

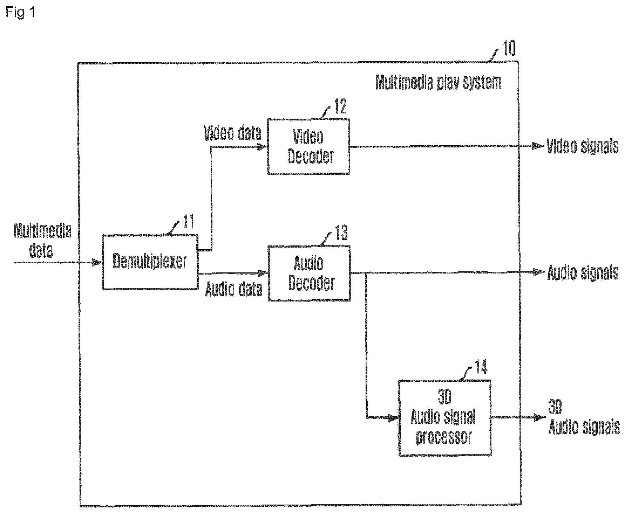

FIG. 1 is a diagram of a typical multimedia playing system.

Referring to FIG. 1, a multimedia playing system 10 includes a demultiplexer 11, a video decoder 12, an audio decoder 13, and a three-dimensional (3D) audio signal processor 14.

When the demultiplexer 11 divides the multimedia data into video data and audio data, the video decoder 12 decodes the divided video data to restore thereinto original video signals. The audio decoder 13 decodes the divided audio data to restore thereinto original audio signals.

The three-dimensional audio signal processor 14 gives three-dimensional stereophonic sound effect to the audio signals restored by the audio decoder 13 to generate three-dimensional audio signals. Herein, the three-dimensional stereophonic sound forms sound source at a certain place in a virtual space through a headphone or a speaker. Thus, the user feels senses of direction, distance, and space as if the sound actually comes from a location where the virtual sound source is.

When users uses the multimedia playing system illustrated in FIG. 1, particularly a portable playing system (portable device), they usually listen to audio signals through a headphone or an earphone. At this time, an Inside-the-Head Localization (IHL) phenomenon occurs. That is, sound image is localized in head of the listener.

The IHL phenomenon can be a cause for reduced sense of space and reality. Thus, various methods have been developed for listeners to feel the three-dimensional effect, for instance, Sound Retrieval System (SRS), Digital Natural Sound Engine (DNSe), and Baseband Booster Effect (BBE). The SRS recovers the reality of the sound damaged in typical stereo. The DNSe is an automatic adjustment method that amplifies low sound to make the listener feel as if he is at the concert hall just with a small MP3 player.

Researches on development of the three-dimensional audio technology have been conducted. It is reported that audio signal processing based on an individualized HRTF is the best way for playing the realistic audio.

In the audio signal processor using a typical HRTF, a microphone is put inside the ears of a human being or a dummy, for instance, a torso. Then, the audio signals are recorded to acquire impulse response. When impulse signals are applied to the audio signals, the user can feel the location of the audio signals in the three-dimensional space.

The HRTF indicates a transfer function generated between the sound source and the ears of the human being. The HRTF is different according to not only directions and height of the sound source but also physical characteristics such as shape and size of the head and the ears. That is, each listener has their own HRTF.

However, up to now, the HRTF measured by various kinds of models, for instance, a dummy head, which is non-individualized HRTF is used for the three-dimensional audio signal processing. Thus, it is difficult to provide the same three-dimensional sound effect to listeners each having different physical characteristics.

Furthermore, the typical multimedia playing system does not employ a module applying different HRTF according to the physical characteristics of each user, the three-dimensional audio signals optimized for the individual cannot be provided.

### DISCLOSURE OF INVENTION

### Technical Problem

When a typical multimedia playing system plays three-dimensional audio, physical characteristics, for instance, shape and size of head, and shape of ears, of a user is not considered. Thus, the user may feel insufficient reality of three-dimensional audio signals. Thus, the object of the present invention is to solve this problem.

An embodiment of the present invention is directed to providing an apparatus.

This invention provides to a three-dimensional audio signal process apparatus for providing the most realistic three-dimensional audio signals by generating three-dimensional audio signals using an HRTF modeled by physical characteristics of individual user and a high realistic multimedia playing system using it.

The objects of the present invention are not limited to the above-mentioned ones. Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### Technical Solution

In accordance with an aspect of the present invention, there is provided a three-dimensional audio signal processing apparatus using a Head Related Transfer Function (HRTF) including an audio decoder for decoding audio data to restore original audio signals, and a three-dimensional audio generator for generating three-dimensional signals corresponding to the audio signals restored by using the HRTF modeled according to physical characteristics of an user, wherein the HRTF modeled according to physical characteristics of an user is an individualized HRTF.

In accordance with another aspect of the present invention, there is provided a method for processing three-dimensional audio signals by using an individualized HRTF, the method including decoding audio data to restore original audio signals and generating three-dimensional audio signals corresponding to the restored audio signals by using the HRTF modeled according to physical characteristics of an user, wherein the HRTF modeled by physical characteristics of the user is an individualized HRTF.

In accordance with another aspect of the present invention, there is provided a highly realistic multimedia playing system including a demultiplexer for dividing multimedia data into video data and audio data, a video decoder for restoring the video data into original video signals, an audio decoder for decoding the audio data to restore the audio data into original audio signals, and a three-dimensional audio generator for generating three-dimensional audio signals corresponding to the restored audio signals by using the HRTF modeled according to physical characteristics of a user, wherein the HRTF modeled according to the physical characteristics of the user is an individualized HRTF.

### Advantageous Effects

In the present invention, three dimensional audio signals are generated according to Head Related Transfer Function (HRTF) based on individual physical characteristics of user. Thus, the most realistic three-dimensional audio signals can be provided to each user.

That is, in this invention, a module receiving the individualized HRTF is added to the multimedia player. When the users play audio data through their own multimedia player, each user can play the high realistic three-dimensional audio optimized for themselves.

### BRIEF DESCRIPTION OF THE DRAWINGS

FIG. 1 is a diagram of a typical multimedia playing system.
FIG. 2 is a diagram showing a high realistic multimedia playing system using an individualized Head Related Transfer Function (HRTF) in accordance with an embodiment of the present invention.
FIG. 3 is a flowchart showing a method for processing signals in the highly realistic multimedia playing system illustrated in FIG. 2.

### BEST MODE FOR CARRYING OUT THE INVENTION

The advantages, features and aspects of the invention will become apparent from the following description of the embodiments with reference to the accompanying drawings, which is set forth hereinafter. Therefore, those skilled in the field of this art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

Three-dimensional sound technology is for understanding a mechanism about detecting a location of sound source using only sense of hearing and technologically applying the mechanism. Generally, the three-dimensional location can be represented by three variables. To estimate the three variables, three independent variables should be measured.

Human or animal, particularly an owl, can accurately estimate not only directions (front, back, left, right, up, and down) of the sound source but also distance from the sound source through two signals measured by ears. Because spectrum of sound source reaching both ears changes according to directions of the sound source because of diffusion or rotation of the sound wave caused by a head, a trunk, and external ears. The changed spectrum of the sound wave is transferred to internal ears. Brain can estimate the accurate location of the sound source.

If the mechanism of detecting the location of the sound source can be accurately understood and reproduced, listeners can listen virtual sound source (embodiment of the virtual sound field) can estimate the location of real sound source by reversely applying the mechanism, i.e., through signals measured by two or more microphones (estimation of the sound source location). This technology can add hearing virtual reality to a typical visual-focused virtual system to increase an immersion of the listener. Also, 5.1 channel surround sound system effect can be achieved by two TV front speakers. Furthermore, a robot can estimate and deal with the location of an unseen person or a noise source. As a result, human feels intimateness about the robot.

To accurately figure out the mechanism of detecting the location of the sound source, the Head Related Transfer Function (HRTF) should be understood. The HRTF is a transfer function between sound waves diffused from the sound source at a head-related certain location and sound waves reached both eardrums. The HRTF is different according to direction and height of the sound source. The HRTF is also changed according to shapes of head and external ears so that individuals have their own HRTF.

When the HRTF optimized for the physical characteristics of the individuals (which is individualized HRTF) is multiplied by audio signals (original sound) in a convolution form and played, the listener can hear the highly realistic three-dimensional audio signals.

Thus, this invention generates the three-dimensional audio signals by using the HRTF corresponding to the physical characteristics of individuals to provide the high realistic three-dimensional audio signals optimized for the individuals.

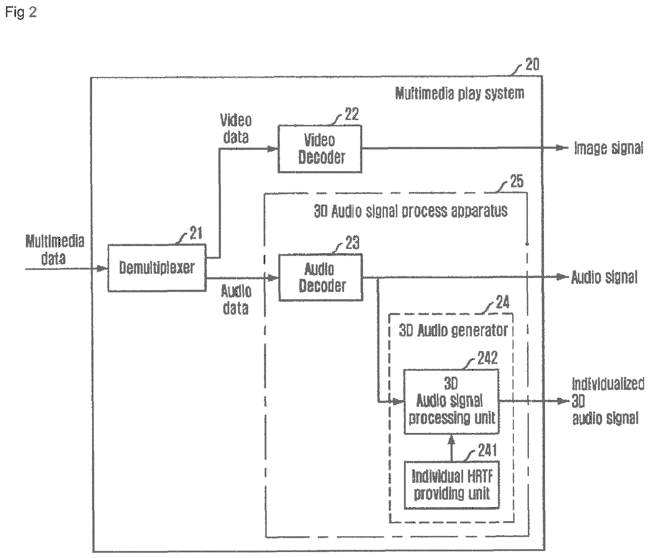

FIG. 2 is a diagram showing a high realistic multimedia playing system using an individualized HRTF in accordance with an embodiment of the present invention.

Referring to FIG. 2, a high realistic multimedia playing system 20 includes a demultiplexer 21, a video decoder 22, an audio decoder 23, and a three-dimensional audio generator 24. The audio decoder 23 and the three-dimensional audio generator 24 are called a three-dimensional audio signal processor 25.

When the multiplexer 21 divides data into video data and audio data, the video decoder 22 restores the divided video data into original video data. The audio decoder 23 decodes the divided audio data and restores the divided audio data into original audio signal (stereo signals not added with three-dimensional effect).

The three-dimensional audio generator 24 generates three-dimensional audio signals corresponding to the audio signals restored in the audio decoder 23 by using the HRTF optimized for an individual. Herein, the three-dimensional audio generator 24 includes an individual HRTF providing unit 241 and a three-dimensional audio signal processing unit 242.

The individual HRTF providing unit 241 receives and stores an HRTF modeled by individual physical characteristics, for instance, size/shape of head, shape of ears, of users to provide it to the three dimensional audio signal processing unit 242.

Hereinafter, a method for acquiring the HRTF corresponding to physical characteristics of the user, that is, the individualized HRTF, will be described in detail.

First, the individualized HRTF can be acquired by measuring the body of the user. That is, the HRTF can be estimated based on the physical characteristics to acquire the individualized HRTF.

Second, the individualized HRTF can be acquired by transforming the HRTF measured through the human model.

Third, the individualized HRTF can be acquired by using an ear microphone. The ear phone is equipped with a small microphone to measure the HRTF in real time to apply to the three-dimensional audio signal processing.

In another embodiment, the individual HRTF providing unit 241 stores different types of HRTF samples. The HRTF may be inputted by the user later and then stored. When the user selects a certain HRTF, the selected HRTF may be provided to the three-dimensional audio signal processing unit 242.

The three-dimensional audio signal processing unit 242 generates the three-dimensional audio signals (three-dimensional audio signal optimized for the individual user) corresponding to the audio signals restored in the audio decoder 23 by using the HRTF provided by the individual HRTF providing unit 241. For instance, the three-dimensional audio signal processing unit 242 convolutes the audio signals restored in the audio decoder 23 to generate the three dimensional audio signals.

To sum up, in this invention, the multimedia playing system has the three-dimensional audio generator 24, i.e., an individualized three-dimensional audio signal processor, for increasing the three-dimensional effect by performing the audio signal process using the individualized HRTF. Thus, the user can listen more realistic three-dimensional audio. Also, in this invention, since the user can input the HRTF optimized for his own physical characteristics into the multimedia playing system, same product (multimedia playing system) can process the signals corresponding to the physical characteristics of the user.

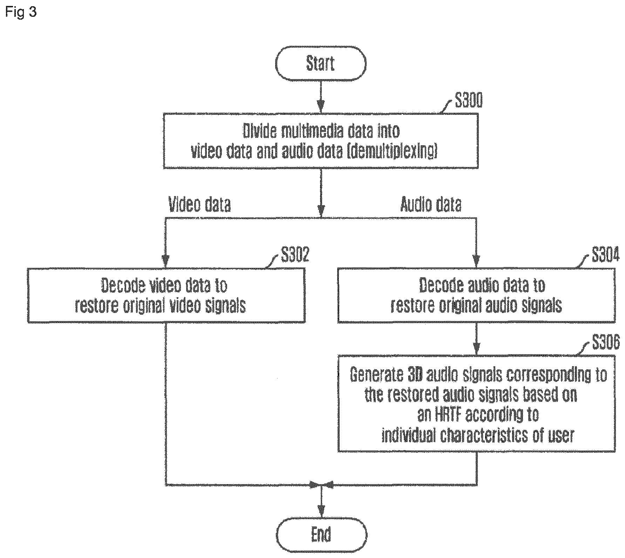

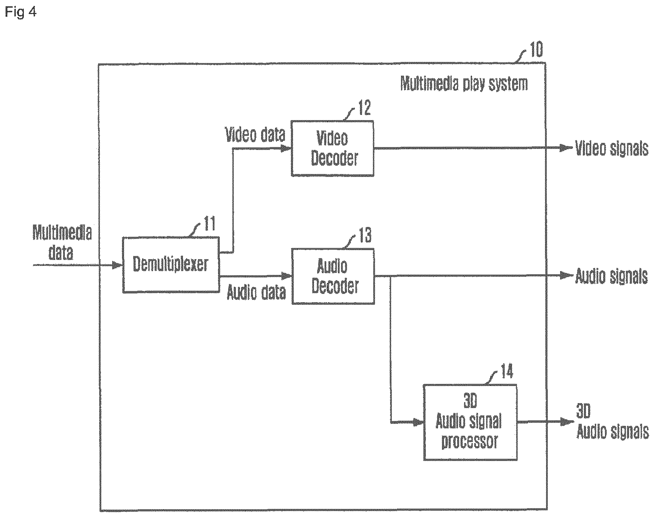

FIG. 3 is a flowchart describing a method for processing signals in the high realistic multimedia playing system illustrated in FIG. 2, particularly a method for processing the three-dimensional audio signals by using the individualized HRTF.

The high realistic multimedia playing system in this invention demultiplexes the multimedia data into the video data and the audio data S300.

The high realistic multimedia playing system decodes the video data to restore the original video data S302.

The highly realistic multimedia playing system decodes the audio data to restore the original audio data S304. Then, the three-dimensional audio signals corresponding to the restored audio signals is generated using the HRTF optimized for the physical characteristics of the user, i.e., the individualized HRTF S306.

The present application contains subject matter related to Korean Patent Application Nos. 2007-0133710 and 2008-0040072 in the Korean Intellectual Property Office on Dec. 18, 2007 and Apr. 29, 2008, the entire contents of which are incorporated herein by reference.

While the present invention has been described with respect to certain preferred embodiments, it will be apparent to those skilled in the art that various changes and modifications may be made without departing from the scope of the invention as defined in the following claims.

Embodiments of the invention are further disclosed in the following:
[1] A three-dimensional audio signal processing apparatus using a Head Related Transfer Function (HRTF), comprising:
   an audio decoder for decoding audio data to restore original audio signals; and
   a three-dimensional audio generator for generating three-dimensional signals corresponding to the audio signals restored by using the HRTF modeled according to physical characteristics of an user, which will be referred to as "individualized HRTF".
[2] The apparatus of embodiment 1, wherein the three-dimensional audio generator includes:
   an HRTF providing unit for receiving the individualized HRTF from external; and
   a three-dimensional audio signal processing unit for generating three-dimensional audio signals corresponding to the restored audio signals based on the individualized HRTF provided by the HRTF providing unit.
[3] The apparatus of embodiment 1, wherein the three-dimensional audio generator includes:
   a three-dimensional audio providing unit for providing the HRTF selected among a plurality of HRTF samples as the individualized HRTF; and
   a three-dimensional audio signal processing unit for generating three-dimensional audio signals corresponding to the restored audio signals based on the individualized HRTF provided by the HRTF providing unit.
[4] The apparatus of embodiment 2, wherein the three-dimensional audio signal processor convolutes the individualized HRTF provided by the HRTF providing unit and the restored audio signals to generate the three-dimensional audio signals.
[5] The apparatus of embodiment 1, wherein the individualized HRTF is modeled according to size and shape of head, and shape of ears of the user.
[6] A method for processing three-dimensional audio signals by using an individualized Head Related Transfer Function (HRTF), the method comprising:
   decoding audio data to restore original audio signals; and
   generating three-dimensional audio signals corresponding to the restored audio signals by using the HRTF modeled according to physical characteristics of a user, which will be referred to as "individualized HRTF".
[7] The method of embodiment 6, wherein the individualized HRTF is an HRTF inputted from external after modeled according to the physical characteristics of the user.
[8] The method of embodiment 6, wherein the individualized HRTF is an HRTF selected by the user among a plurality of HRTF samples.
[9] The method of embodiment 6, wherein the three-dimensional audio signals are generated convoluting the individualized HRTF and the restored audio signals.
[10] A highly realistic multimedia playing system, comprising:
   a demultiplexer for dividing multimedia data into video data and audio data;
   a video decoder for restoring the video data into original video signals;
   an audio decoder for decoding the audio data to restore the audio data into original audio signals; and
   a three-dimensional audio generator for generating three-dimensional audio signals corresponding to the restored audio signals by using a Head Related Transfer Function (HRTF) modeled according to physical characteristics of a user, which will be referred to as "individualized HRTF".
[11] The system of embodiment 10, wherein the three-dimensional audio generator includes: an HRTF providing unit for receiving the individualized HRTF from external;
   and
   a three-dimensional audio signal processing unit for generating three-dimensional audio signals corresponding to the restored audio signals by using the individualized HRTF provided by the HRTF providing unit.
[12] The system of embodiment 10, wherein the three-dimensional audio generator includes: an HRTF providing unit for providing the HRTF selected by the user among a
   plurality of HRTF samples as the individualized HRTF; and
   a three-dimensional audio signal processing unit for generating three-dimensional audio signals corresponding to the restored audio signals based on the individualized HRTF provided by the HRTF providing unit.

## Claims

1. A method for processing three-dimensional audio signal, comprising:
decoding audio data; and
generating three-dimensional signals corresponding to the audio signals to listen sound source in a virtual space for a listener
characterized that:
wherein the generating comprising:
generating three-dimensional signals corresponding to the audio signals using a HRTF(Head Related Transfer Function) different according to direction and height of the sound source for providing an immersion of the listener.

2. The method of claim 1, wherein the HRTF is provided from an external or is selected from among a plurality of HRTF by the listener.

3. The method of claim 1 or claim 2, wherein the HRTF is modeled according to size and shape of head, or shape of ears of the listener.

4. The method of any one of claims 1 to 3, wherein the HRTF is determined based on an impulse response for the location of the audio signal.

5. The method of any one of claims 1 to 4, wherein the HRTF is modeled according to physical characteristics of a user, which will be referred to as "individualized HRTF".

6. The method of claim 5, wherein the HRTF is transfer function generated between the sound source and the ears of the user.
